# EUROPEAN PATENT APPLICATION

(11) **EP 4 603 256 A1**
(43) Date of publication of application: **20.08.2025**
(21) Application number: 24158092.7
(22) Date of filing: 16.02.2024
(51) Int. Cl.: B29C 48/00, B29C 48/92, B29B 7/28, B29B 7/46, B29B 7/74, B29C 48/40, B29C 48/67, B29B 7/72

(54) **AUTOMATIC SYSTEM TO CONTROL A PHYSICAL PROPERTY LEVEL OF RUBBER MIXED BY A CONTINUOUS MIXER**

(71) Applicant: Bridgestone Europe NV/SA, 1930 Zaventem (BE)
(72) Inventor: STRAFFI, Paolo, 00128 Roma (IT); PONTONE, Roberto, 00128 Roma (IT); WASIAK, Dariusz, 61-017 Bridgestone Poznan Sp. z.o.o. Ba tycka 65, Pozna (PL)
(74) Representative: Marchetti, Alessio

(57) **Abstract**

A method for production of a compound used for manufacturing an article made of rubber, comprising:
supplying components of the compound to a continuous mixer, the continuous mixer comprising:
a screw extruder comprising at least one rotating screw housed inside a chamber, and
an extrusion head that is coupled to the chamber; and

transporting, by the screw extruder, the components through the chamber of the continuous mixer to the extrusion head by rotating the screw at a first screw speed, wherein the components are continuously mixed for producing the compound, and wherein the continuous mixer has a first temperature profile;
measuring a compound pressure at the extrusion head;
determining that the measured compound pressure deviates from a target pressure of the compound pressure;
adjusting the compound pressure to the target pressure, wherein adjusting the compound pressure to the target pressure comprises:
determining a second screw speed for rotating the screw; and
when the second screw speed is outside a predefined range of the screw speed: rotating the screw at the upper, or lower limit of the predefined range of the screw speed, and
determining a second temperature profile for adjusting the temperature profile of the chamber.

## Description

### TECHNICAL FIELD

### FIELD OF INVENTION

This disclosure is generally directed to a system, apparatus, method and computer program to automatically control a physical property level of rubber mixed by a continuous mixer.

### BACKGROUND

An apparatus to produce a compound used for manufacturing an article made from rubber typically comprises a continuous mixer which is supplied with components of the compound to be produced.

As illustrated in WO 2021/094896 A1, continuous mixing may be performed by means of a single screw extruder (or twin screw extruder or multiple screw planetary type extruder). Furthermore, a mixing apparatus (e.g. a continuous mixer) typically comprises a number of hoppers for supplying components of the compound that are arranged at one end of the continuous mixer and/or distributed along a chamber of the continuous mixer. Finally, the mixing apparatus comprises an extrusion head that is coupled directly and with structural continuity to the chamber. The extrusion head receives the produced compound at an inlet and dispenses the compound at an outlet in the required form. For example, the compound can be dispensed in a form of a strip with the required transverse dimensions.

Along the mixing path in a continuous mixer, the components of the compound are subjected to temperature gradients, shear stress and pressure that is applied for mixing the components and to push the material along a path towards the exit of the continuous mixer. The physical properties of the final product or compound significantly vary from time to time. This variation is due to material and process intrinsic variability, even if extruder speed, temperature profile and raw material addition are kept constant.

To improve continuous mixing processes for manufacturing an article made from rubber, new methods, systems, and apparatuses to automatically control physical properties of the final compound are needed to guarantee consistent high-quality of the produced compound.

### SUMMARY

The above objective is achieved by the present disclosure of systems, apparatuses, methods or computer programs to automatically control a physical property level of a compound mixed by a continuous mixer. In particular, the present invention aims at keeping a compound pressure at the exit of a mixing apparatus (e.g. extrusion head of an continuous mixer) constant, to allow the production of a final compound with stable physical properties.

According to a first aspect, the invention provides a method for a production of a compound used for manufacturing an article made of rubber. The method comprises supplying components of the compound to a continuous mixer. The continuous mixer further comprises: a screw extruder comprising at least one rotating screw housed inside a chamber, and an extrusion head that is coupled to the chamber. The method further comprises transporting, by the screw extruder, the components through the chamber of the continuous mixer to the extrusion head by rotating the screw at a first screw speed, wherein the components are continuously mixed for producing the compound, and wherein the continuous mixer has a first temperature profile. The method further comprises measuring a compound pressure at the extrusion head, determining that the measured compound pressure deviates from a target pressure of the compound pressure (or "*targetprocess pressure*")*,* and adjusting the compound pressure to the target pressure. Adjusting the compound pressure to the target pressure may comprise determining a second screw speed for rotating the screw, and when the second screw speed is outside a predefined range of the screw speed: rotating the screw at the upper, or lower limit of the predefined range of the screw speed, and determining a second temperature profile for adjusting the temperature profile of the chamber.

Exemplary components supplied to the continuous mixer may contain some or all of the following components: polymer, reinforcing or non-reinforcing filler, plasticizers, resins, antioxidants and antiozonants, waxes, curing promoters, sulfur, accelerants and retarders.

In general, the target pressure corresponds to a pressure of the compound at the exit of the continuous mixer considered optimal for the actual process. The exit of the continuous mixer may be the exit of an extrusion head of a continuous mixer.

The at least one rotating screw housed inside the chamber may be a single, or a double screw. In general, a screw can have paddles, or can be a shaftless screw.

During mixing, chemical reactions may occur influencing the physical properties of the produced material (e.g. variation of viscosity). Furthermore, changing the screw speed (or torque) is related to a variation of the residence time of the components in the continuous mixer resulting in a variation of the material properties in each section of the continuous mixer. However, the screw speed alone has no direct relationship with the physical properties of the final product. However, measuring the compound pressure at the extruder head allows indirectly monitoring the physical properties of the produced compound (e.g. indirect monitoring of viscosity). In particular, the measured compound pressure is related to the physical properties of the final compound. Thus, adjusting the compound pressure, measured at the extrusion head, to a predefined target pressure allows keeping the physical properties of the final compound (or final product) constant.

In addition, a variation of the temperature profile in terms of an amount of heat released or removed to the mixed material also influences the physical properties of the final product. Thus, when a screw speed variation is not able to keep the compound pressure under control (compound pressure has to correspond to the target pressure), the amount of heat released or removed to the mixed material can be varied (e.g. by using another temperature profile) to push compound pressure back to the target pressure. In particular, an algorithm, which is related to the amount of heat released or removed to the mixed material, can be highly effective whenever a chemical reaction takes place in the continuous mixer to keep head pressure constant.

Checking that a desired (second) temperature profile corresponds to an allowed temperature profile (e.g. allowed temperature variation) ensures that the thermal regulation remains within the equipment or apparatus capability.

According to a second aspect, adjusting the compound pressure to the target pressure may further comprise determining that the second temperature profile is an allowed temperature profile, adjusting the temperature profile of the chamber to the second temperature profile, and causing the continuous mixer to transport the components through the chamber of the continuous mixer by using the second temperature profile.

Causing the continuous mixer to transport the components through the chamber of the continuous mixer by using the second temperature profile is beneficial when a variation of the screw speed alone is not able to keep the compound pressure to the target pressure. In particular, using a second temperature profile changes the applied amount of heat released or removed to the mixed material, which allows pushing the compound pressure back to the target pressure.

According to a third aspect, adjusting the compound pressure to the target pressure may further comprise determining that the second screw speed is not outside the predefined range of the screw speed.

The method may further comprise causing the continuous mixer to transport the components through the chamber of the continuous mixer by using the second screw speed and the first temperature profile.

Adjusting the compound pressure to the target pressure by varying the screw seep (e.g. by using a second screw speed which is not outside the predefined range of the screw speed) of the screw extruder results in a variation of the residence time of the components in the continuous mixer. Varying the residence time of the components in the continuous mixer influences (mostly non-linear) the physical properties of the produced compound or final product. For example, increasing the screw speed results in a decrease of residence time of the components in the continuous mixer influencing the physical properties of the produced compound or final product.

According to a further aspect, the method may further comprise measuring the compound pressure at the extrusion head when applying the second screw speed to the continuous mixer. The method may further comprise determining that the measured compound pressure when applying the second screw speed allows to reach the target pressure, and continue transporting the components through the chamber by using the second screw speed.

According to a further aspect, the method may further comprise measuring the compound pressure at the extrusion head when applying the second screw speed to the continuous mixer. The method may further comprise determining that the measured compound pressure, when applying the second screw speed to the continuous mixer, deviates from the target pressure. The method may further comprise determining a third screw speed for rotating the screw, determining that the third screw speed is outside the predefined range of the screw speed, rotating the screw at the upper, or lower limit of the predefined range of the screw speed. The method may further comprise determining that the second temperature profile is an allowed temperature profile, adjusting the temperature profile of the chamber to the second temperature profile, and causing the continuous mixer to transport the components through the chamber of the continuous mixer by using the second temperature profile.

Stepwise adjusting the screw speed of the screw extruder within a predefined screw speed range using a first, second or third screw speed, allows a fine adjustment of the process conditions to keep compound pressure at the extruder head to the target pressure.

An additional temperature profile adjustment (e.g. temperature adjustment of different temperature variable zones of the chamber) allows influencing of process conditions, even when the screw speed reached the limit of the predefined screw speed range.

Prioritizing the screw speed adjustment over the temperature adjustment is beneficial in that the process conditions can be varied stepwise and in that the effect of a screw speed variation is faster compared to the effect of a temperature adjustment. Varying the screw speed (until a predefined screw speed range is reached) before starting to vary the temperature allows changing process parameters as few as possible (e.g. screw speed only, or screw speed and temperature profile in case varying screw speed only is not sufficient to reach the target pressure).

According to a further aspect, the method may further comprise: measuring the compound pressure at the extrusion head when applying the second temperature profile to the continuous mixer and when rotating the screw at the upper, or lower limit of the predefined range of the screw speed; and determining that the measured compound pressure deviates from the target pressure; and determining that a third temperature profile is not an allowed temperature profile; and indicating that the compound pressure cannot be adjusted automatically.

An indication that the compound pressure cannot be adjusted automatically allows the user or operator to stop using the automatic system to control a physical property level of a compound. The operator can switch to another solution to control the physical property level.

According to a further aspect, measuring the compound pressure may comprise that the resulting compound pressure at least for a time span corresponding to a residence time of the components in the continuous mixer.

The components entering the continuous mixer pass the continuous mixer within a residence time. Thus, the residence time is needed until the measured compound pressure is adapted to a varied process condition.

According to a further aspect, the residence time of the components in the continuous mixer may be dependent on the screw speed of the extruder. For example, the residence time may be set to a minimum of 2 minutes and to a maximum of 15 minutes for a mixer length of about 10 meters.

According to a further aspect, the screw extruder may be a single screw extruder, a twin screw extruder, or a multiple screw extruder.

According to a further aspect, the compound pressure may be measured at an exit of the extruder head. For example, the target pressure may be set to a value between 2000 mbar and 10 000 mbar.

According to a further aspect, the compound pressure can be measured at additional positions along the path of the continuous mixer.

According to an aspect, determining that the measured compound pressure deviates from a target pressure of the compound pressure may comprise determining that the compound pressure is outside a range for example of +/- 30% compared to the target pressure.

In a further aspect, the compound pressure may preferably be outside a range of for example +/- 15% compared to the target pressure.

In some examples, an allowed range of the target pressure might be referred as a dead band of the target pressure.

According to a further aspect, the predefined range of the screw speed may be +/- 30% of a setpoint of the screw speed

According to a further aspect, the predefined range of the screw speed may be +/- 50 rpm around a setpoint of the screw speed.

According to a further aspect, adjusting the temperature profile of the chamber may comprise adjusting the temperature at least at one zone of the continuous mixer, or adjusting the temperature at a reaction section of the continuous mixer.

According to a further aspect, the invention provides an apparatus for production of a compound used for manufacturing an article made of rubber. The apparatus comprises: a continuous mixer comprising: a screw extruder comprising at least one rotating screw housed inside a chamber, and an extrusion head that is coupled to the chamber; and wherein the screw extruder transports the components through the chamber of the continuous mixer to the extrusion head by rotating the screw at a first screw speed, wherein the components are continuously mixed for producing the compound, and wherein the continuous mixer has a first temperature profile. The apparatus further comprises means for measuring a compound pressure at the extrusion head, means for determining that the measured compound pressure deviates from a target pressure of the compound pressure, means for adjusting the compound pressure to the target pressure. The means for adjusting comprises means for determining a second screw speed for rotating the screw, and when the second screw speed is outside a predefined range of the screw speed, means for rotating the screw at the upper, or lower limit of the predefined range of the screw speed, and means for determining a second temperature profile for adjusting the temperature profile of the chamber.

According to another aspect the apparatus for production of a compound used for manufacturing an article made of rubber according to the previous aspect, may further comprise means for carrying out the method of the present disclosure.

According to another aspect, a computer-program may comprise instructions for performing a method according to the present disclosure, when executed by a processor.

### BRIEF DESCRIPTION OF THE DRAWINGS

Fig. 1 illustrates a schematic side view of an exemplary apparatus to produce a compound used for the manufacture of rubber products and pneumatic tires.
Fig. 2 illustrates a schematic side view of an exemplary continuous mixer having multiple temperature variable sections to generate a certain temperature profile of the apparatus.
Fig. 3 shows a flow diagram illustrating a method to control a physical property level of a compound produced by a continuous mixer according to embodiments of the present disclosure.
Fig. 4 shows a flow diagram illustrating a method to control a physical property level of a compound produced by a continuous mixer according to embodiments of the present disclosure.
Fig. 5 shows a flow diagram illustrating a method to control a physical property level of a compound produced by a continuous mixer according to embodiments of the present disclosure.
Fig. 6 shows a flow diagram illustrating a method to control a physical property level of a compound produced by a continuous mixer according to embodiments of the present disclosure.
Fig. 7 shows a flow diagram illustrating a method to control a physical property level of a compound produced by a continuous mixer according to embodiments of the present disclosure.
Fig. 8 illustrates a computer-implemented algorithm to control compound pressure at an exit of a continuous mixer according to an embodiment of the present invention.

### DETAILED DESCRIPTION

The present disclosure provides systems, apparatuses, methods and computer programs to provide a guaranteed reproducible quality of a final compound. The systems, apparatuses, methods, and computer programs according to this disclosure offer many advantages. The invention allows an automatic control of physical properties of a produced compound by adjusting a compound pressure measured at an exit of the apparatus to a defined target pressure ("*target process pressure*")*.* In particular, the present disclosure allows for automatically controlling a physical property level of rubber mixed by a continuous mixer.

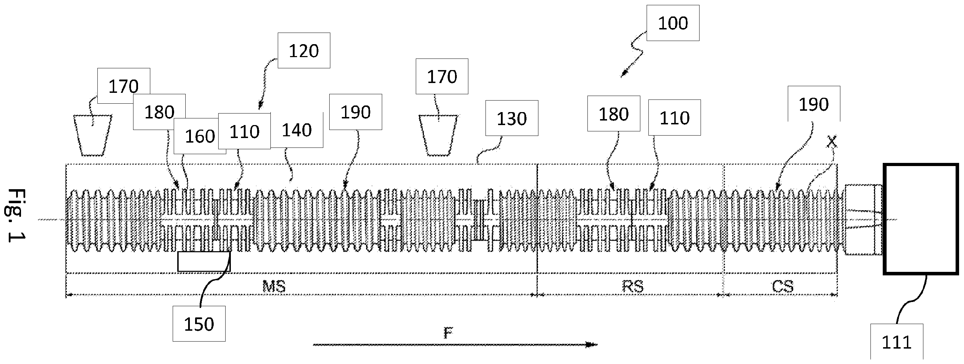

Fig. 1 illustrates a schematic side view of an exemplary apparatus 100 to produce a compound used for the manufacture of rubber products and pneumatic tires. The apparatus 100 comprises a continuous mixer 120 which is supplied with components of the compound.

Exemplary components supplied to the continuous mixer may contain some or all of the following components: polymer, reinforcing or non-reinforcing filler, plasticizers, resins, antioxidants and antiozonants, waxes, curing promoters, sulfur, accelerants and retarders.

The continuous mixer 120 comprises an external sleeve 130 provided with two long-life sealing heads (not shown) for closing each of the ends of said sleeve 130. Preferably, the sleeve 130 has a tubular shape with respect to an axis X. Within the interior of the sleeve 130 a chamber 140 is defined for housing the components.

In a first embodiment, the continuous mixer 120 comprises a screw extruder comprising at least one rotating screw housed inside the chamber 140, and an extrusion head 111 that is coupled to the chamber 140. The screw extruder can transport the components through the chamber 140 of the continuous mixer 120 to the extrusion head 111 by rotating the screw at a first screw speed, wherein the components are continuously mixed for producing the compound, and wherein the continuous mixer 120 has a first temperature profile.

In a further embodiment, the continuous mixer 120 may be implemented by means of a single screw extruder. Inside the sleeve 130, a shaft 150 is housed that is coaxial to the axis X and is connected to an auger 160. The apparatus further comprises actuating means for rotating the shaft 150 about the axis X. The shaft 150 is implemented by means of a series of segments that are mutually coaxial, arranged in sequence and connected to one another by means of intermediate supporting elements (which typically serve as a connecting element between the different segments of the shaft 150 and, at the same time, act as a structural support to prevent deflections of the shaft 150 itself).

According to a further embodiment, the continuous mixer 120 may be implemented by means of a twin-screw extruder. Inside the sleeve 130, a pair of shafts 150 is housed that are provided with respective axes which are parallel therebetween (and parallel to the axis X), wherein each thereof carries and is connected to an auger 160. The apparatus then may comprise actuator means for rotating each shaft 150 around the axis thereof in a concordant manner (corotating) in relation to the other shaft 150 or in a discordant manner (counter rotating) in relation to the other shaft 150.

In an embodiment, the mixing of the components takes place while moving in a direction of flow F within the chamber 140. Along the path in the direction of flow F within the chamber 140, the components of the compound may be subjected to temperature gradients, shear stress and pressure that is applied for mixing the components and to push the material along the path in the direction of flow F.

In a further embodiment, the apparatus 100 may comprise at least one supply inlet or hopper 170 to supply the components of the compound. Alternatively, any type of dispensers can be used at the at least one hopper 170 that are suitable for supplying the components of the compound in solid state, liquid or gaseous form, for example extruders, single and multi-screw feeders, rotary feeders, injector devices for liquids or gas, conveyor belts, vibrating belts. The at least one hopper 170 may be arranged at one end of the inlet of the continuous mixer 120.

In a further embodiment, the continuous mixer 120 may comprise a plurality of hoppers 170, each for supplying at least one respective component of the compound, wherein the hoppers 170 may be distributed along the direction of flow F of the compound being processed.

In an embodiment, the continuous mixer 120 may be formed from the alternation of mixture portions (or sections) 180, transport portions 190, and mixing portions 110.

Within the mixture portions 180, the components of the compound may be subjected to an increase in shear stress for a formation of a homogeneous compound at a macroscopic level (in other words, the elements are incorporated within the polymer matrix of the compound).

The transport portions 190 may be instead implemented in order to deliver the compound being processed from one longitudinal end of the chamber 140 to the other, subjecting the components of the compound to negligible changes in shear stress and applied pressure.

Subsequently, the compound may encounter one or more dispersive mixing elements 110 wherein the shear stresses applied increase considerably thereby allowing for the dispersion of the components of the compound within the matrix. The compound being processed may alternatively be presented in solid state form or else in a completely molten state or else partly in solid state form and partly in the molten state. The conveying portions are configured to push the material in the direction of flow F, exerting mixing upon the same that is substantially zero or very low.

The different mixture, transport and mixing portions 180, 190 and 110 of the continuous mixer 120 may be arranged/coupled in series with structural continuity in such a way that the respective inner chambers are physically and seamlessly connected. For example, the different portions 180, 190 and 110 of the continuous mixer 120 are directly flanged one after the other.

According to an embodiment, the apparatus 100 comprises an extrusion head 111 that is directly coupled to the chamber 140 in such a way as to receive at the inlet the compound produced and to dispense at the outlet the compound in the required form. For example, the form may be a strip having the required transverse dimensions. Further, the apparatus 100 comprises means for measuring a compound pressure at the extrusion head 111.

In an exemplary embodiment, the apparatus 100 may be divided into three sections indicated respectively with MS, RS and CS.

The section indicated with MS (mixing section) may be the section wherein the mixing of the compound being processed exclusively takes place.

The section indicated with RS may be arranged downstream of the mixing section MS and represents the reaction section wherein a chemical reaction (for example vulcanization) is activated and which changes the characteristics of the compound being processed. Typically, within the reaction section RS there is a rise in temperature of the compound under reaction in relation to the adjacent mixing MS and cooling sections CS. The increase in temperature within the reaction section RS is produced by means of heating means (for example electrical resistances) that surround the sleeve 130.

The section indicated with CS may be located downstream of the reaction section RS and represents the cooling section wherein the compound being processed is cooled. In particular, the compound being processed is cooled down to a temperature that will inhibit further development of the reaction that takes place within the reaction section RS. Any reagents introduced downstream of the reaction section RS (upstream of the cooling section CS) encounter temperature and pressure conditions such as to prevent the reaction under the conditions of the cooling section CS within a residence time in the same area. The cooling section CS is provided with means for the cooling of the compound being processed by means of a fluid (for example water). The means for the cooling of the compound being processed are implemented in such a way as to surround the sleeve 130 and, consequently, the compound while moving in the direction of flow F.

In another exemplary embodiment, the apparatus 100 may be divided into more or less than three sections.

In another exemplary embodiment, the apparatus 100 has no reaction section RS wherein a chemical reaction (for example vulcanization) is activated and/or no cooling section CS wherein the compound being processed is cooled.

In an embodiment, each mixing, reaction and cooling section may be defined by a suitable combination of mixture, transport and mixing portions 180, 190, 110 placed in succession one after another. The three mixing MS, reaction RS and cooling CS sections may be arranged in succession one after another with structural continuity in such a way that the respective inner chambers are physically and seamlessly connected.

In a further embodiment, the apparatus comprises means for determining that the measured compound pressure deviates from a target pressure of the compound pressure.

In a further embodiment, the apparatus comprises means for adjusting the compound pressure to the target pressure, wherein the means for adjusting comprises means for determining a second screw speed for rotating the screw.

In an embodiment, when the second screw speed is outside a predefined range of the screw speed, the apparatus may comprise means for rotating the screw at the upper, or lower limit of the predefined range of the screw speed, and means for determining a second temperature profile for adjusting the temperature profile of the chamber.

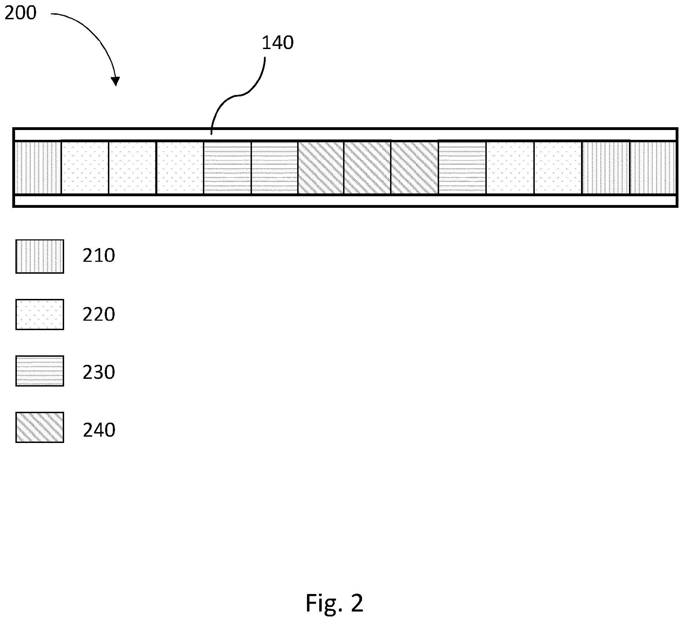

Fig. 2 illustrates a schematic side view of an exemplary continuous mixer having multiple temperature variable zones to generate a certain temperature profile of the apparatus.

In an embodiment, an apparatus, as illustrated in Fig. 1, may have one or more temperature variable zones along a chamber of a continuous mixer.

In Fig. 2 the illustrated continuous mixer has multiple temperature variable zones. In particular, some of the zones of the continuous mixer could be very cold zones 210, cold zones 220, warm zones 230, or hot zones 240.

In some embodiments, the cooling section CS or the mixing section MS illustrated in Fig. 1, may comprise one or more cold, and/or one or more very cold zones.

In some embodiments, cold or very cold zones (e.g. at the CS) may be provided with means for cooling of the compound being processed by means of a fluid (for example water). The means for cooling of the compound being processed are implemented in such a way as to surround the sleeve 130 and, consequently, the compound while moving in the direction of flow F.

In some embodiments, the reaction section RS, as illustrated in Fig. 1, may comprise one or more warm, and/or one or more hot zones.

In some embodiments, the one or more warm, and/or one or more hot zones may (e.g. at the RS) may be produced by means of heating means (for example electrical resistances) that surround the sleeve 130.

In an embodiment, the temperature of a very cold zone may be below 40°C.

In an embodiment, the temperature of a cold zone may be between 40 °C and 100 °C.

In an embodiment, the temperature of a warm zone may be between 100 °C and 120 °C. In a further embodiment, the temperature of a hot zone may be between 120 °C and 170 °C.

In an embodiment, adjusting the temperature profile of the chamber may comprise adjusting the temperature at least at one zone of the chamber.

In a further embodiment adjusting the temperature profile of the chamber may comprise adjusting the temperature at a section of the continuous mixer.

In general, a certain temperature profile (e.g. a first, second or third temperature profile, etc.) relates to an amount of heat released or removed to the mixed material to the compound to be produced.

Increasing the temperature inside the chamber of the continuous mixer (e.g. increasing the amount of heat released to the mixed material) results in an increase of the conversion rate of the chemical reaction and consequently influences the physical properties of the final compound. Therefore, the temperature can be changed in one or more temperature variable zones of the continuous mixer (illustrated in Fig. 2) to control the physical properties of the final compound.

In another example, varying the temperature inside the chamber of the continuous mixer and/or varying the screw speed (or residence time) may influence the physical properties of a final compound without causing a chemical reaction.

In some embodiments, the temperature profile (temperature of one or more temperature variable zones) may be changed in such a way keeping the temperature of at the extrusion head of the continuous mixer constant.

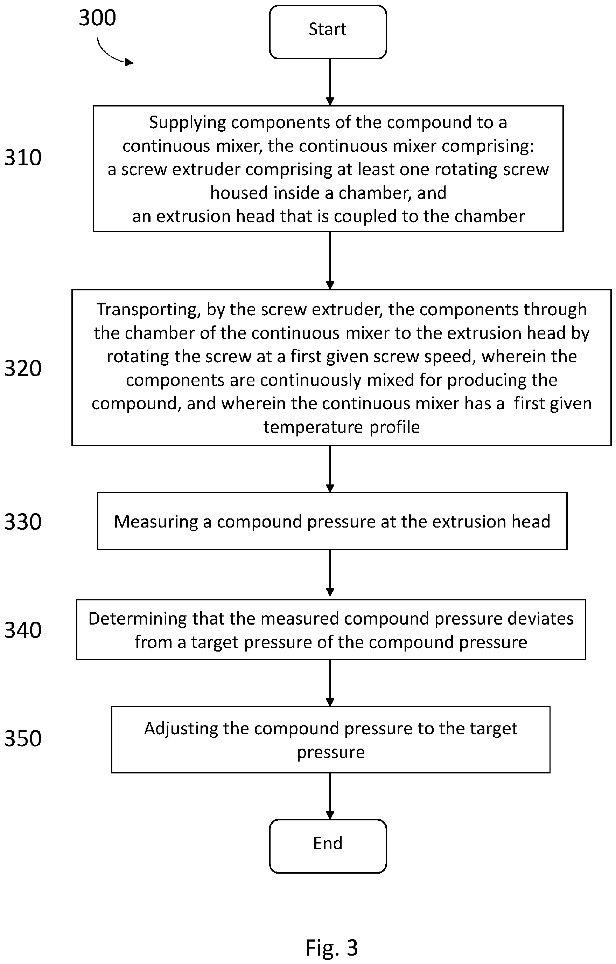

Fig. 3 shows a flow diagram illustrating a method to control a physical property level of a compound produced by a continuous mixer according to embodiments of the present disclosure.

According to an embodiment, the invention provides a method 300 to produce a compound used for manufacturing an article made of rubber.

The method comprises supplying 310 components of the compound to a continuous mixer, the continuous mixer comprising: a screw extruder comprising at least one rotating screw housed inside a chamber, and an extrusion head that is coupled to the chamber.

The method further comprises transporting 320, by the screw extruder, the components through the chamber of the continuous mixer to the extrusion head by rotating the screw at a first screw speed, wherein the components are continuously mixed for producing the compound, and wherein the continuous mixer has a first temperature profile.

The method further comprises measuring 330 a compound pressure at the extrusion head, determining 340 that the measured compound pressure deviates from a target pressure of the compound pressure, and adjusting 350 the compound pressure to the target pressure.

In some embodiments, an analogue pressure sensor may be used to obtain the compound pressure. The pressure sensor may be located at the extrusion head at an exit of the continuous mixer. However due to the intrinsic response technological characteristics of a pressure sensor, either related to the sensor or to the material characteristics and condition, the raw signal of the sensor may contain a relevant portion of variability. For example, the signal may be down-sampled to remove the variability before passing it to an algorithm for adjusting the compound pressure. For example, the signal may be down-sampled to a frequency, for example, at 1 Hz, with a range from a minimum of 0.5Hz to a maximum of 10Hz. Then, the down-sampled value may be put into a moving median having the number of samples which matches a material residence time, which can exemplarily be set within a range from a minimum of about 2 minutes to a maximum of about 15 minutes.

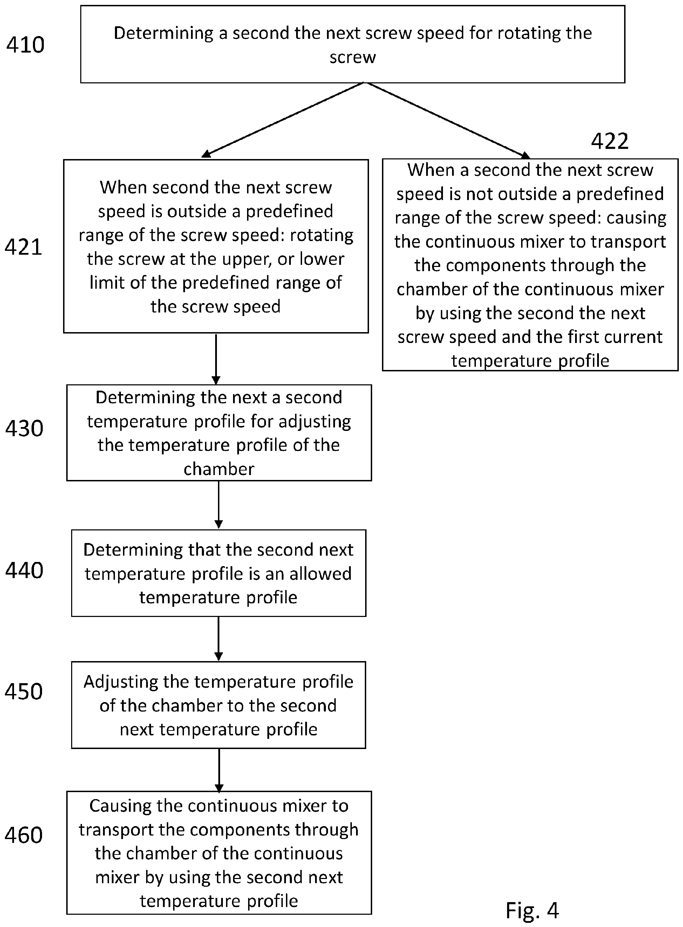

Fig. 4 shows a flow diagram illustrating a method to control a physical property level of a compound produced by a continuous mixer according to embodiments of the present disclosure.

Adjusting 350 the compound pressure to the target pressure, as illustrated in Fig. 3, may further comprise determining 410 a second screw speed for rotating the screw, and when the second screw speed is outside a predefined range of the screw speed (maximum variation range), rotating 421 the screw at the upper, or lower limit of the predefined range of the screw speed, and determining 430 a second temperature profile for adjusting the temperature profile of the chamber. For example, rotating the screw within the predefined range avoids reaching mechanical limitations of the system, or process.

During mixing, chemical reactions may occur influencing the physical properties of the produced material (e.g. variation of viscosity). Furthermore, changing the screw speed (or torque) is related to a variation of the residence time of the components in the continuous mixer resulting in a variation of the material physical properties (e.g. viscosity) in each section of the continuous mixer. However, the screw speed alone has no direct relationship with the physical properties of the final product. However, measuring the compound pressure at the extruder head allows indirectly monitoring the physical properties of the produced compound (e.g. indirect monitoring of viscosity). In particular, the measured compound pressure is related to the physical properties of the final compound. Thus, adjusting the compound pressure, measured at the extrusion head, to a predefined target pressure allows keeping the physical properties of the final compound (or final product) constant. In particular, the compound pressure is related to compound characteristics whenever referred to a reference temperature.

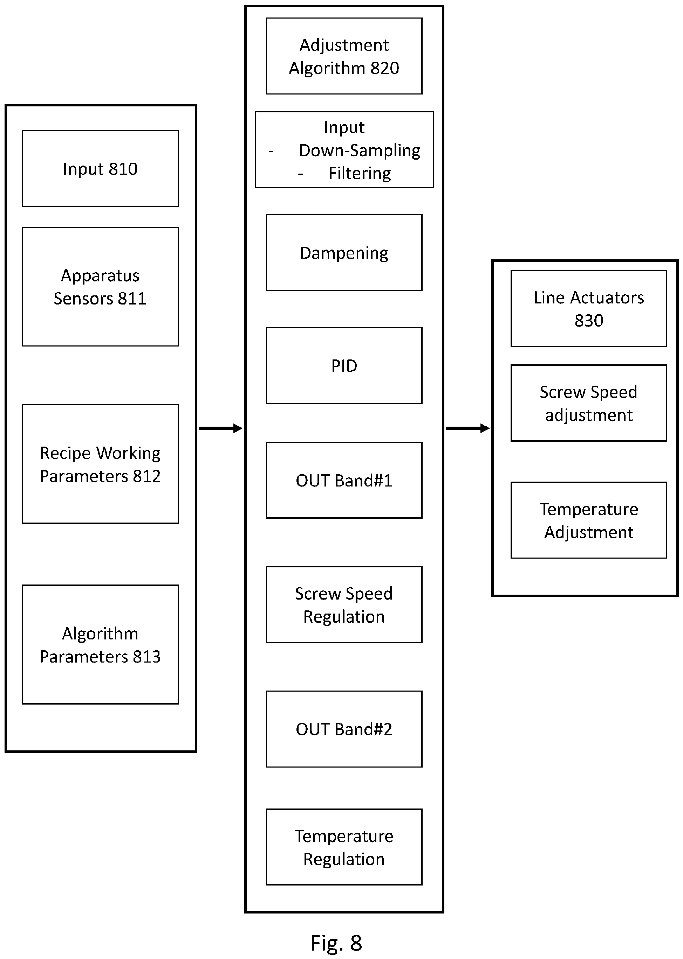

In addition, a variation of the temperature profile (changing the provided amount of heat released or removed to the mixed material) also varies the physical properties of the final product. Thus, when a screw speed variation is not able to keep the compound pressure under control (cf. Fig. 8: Output Band#1 exceeds the maximum variation range), the provided amount of heat released or removed to the mixed material can be varied (e.g. by using a second temperature profile for the chamber of the continuous mixer) to push compound pressure back to the target pressure. The algorithm, which is related to the amount of heat released or removed to the mixed material, is highly effective whenever a chemical reaction takes place in the continuous mixer to keep head pressure constant.

According to an embodiment, adjusting 350 the compound pressure to the target pressure may further comprise determining 440 that the second temperature profile is an allowed temperature profile (allowed temperature variation). In some embodiments, an allowed temperature profile corresponds to an allowed temperature variation in one or more temperature variable zones of the continuous mixer (e.g. one or more temperature variable zones of a reaction section). Defining an allowed temperature variation allows to ensure that the thermal regulation remains within the equipment or apparatus capability.

Adjusting 350 the compound pressure to the target pressure may further comprise adjusting 450 the temperature profile of the chamber to the second temperature profile, and causing 460 the continuous mixer to transport the components through the chamber of the continuous mixer by using the second temperature profile.

Causing the continuous mixer to transport the components through the chamber of the continuous mixer by using the second temperature profile is beneficial when a variation of the screw speed alone is not able to keep the compound pressure to the target pressure. In particular, using a second temperature profile changes the amount of heat released or removed to the mixed material applied in the mixing process allowing to push the compound pressure back to the target pressure.

According to a further embodiment, adjusting 350 the compound pressure to the target pressure may further comprise determining 410 a second screw speed for rotating the screw, and when the second screw speed is not outside the predefined range of the screw speed; causing 422 the continuous mixer to transport the components through the chamber of the continuous mixer by using the second screw speed and the first temperature profile.

Adjusting the compound pressure to the target pressure by varying the screw speed of the extruder results in a variation of the residence time of the components in the continuous mixer. For example, a second screw speed may be used which is not outside the predefined range of the screw speed. Varying the residence time of the components in the continuous mixer influences the physical properties of the produced compound.

For example, increasing the screw speed results in a decrease of residence time of the components in the continuous mixer influencing the physical properties of the produced compound.

In another example, decreasing the screw speed results in an increase of residence time of the components in the continuous mixer influencing the physical properties of the produced compound.

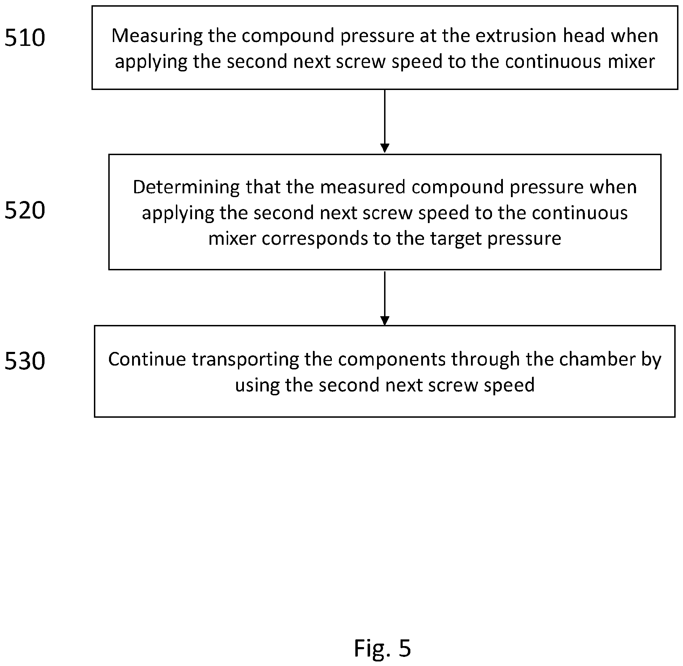

Fig. 5 shows a flow diagram illustrating a method to control a physical property level of a compound produced by a continuous mixer according to embodiments of the present disclosure.

The method illustrated with respect to Fig. 4, wherein the second screw speed is not outside a predefined range of the screw speed, may further comprise measuring 510 the compound pressure at the extrusion head when applying the second screw speed, determining 520 that the measured compound pressure when applying the second screw speed corresponds to the target pressure, and continue transporting 530 the components through the chamber by using the second screw speed.

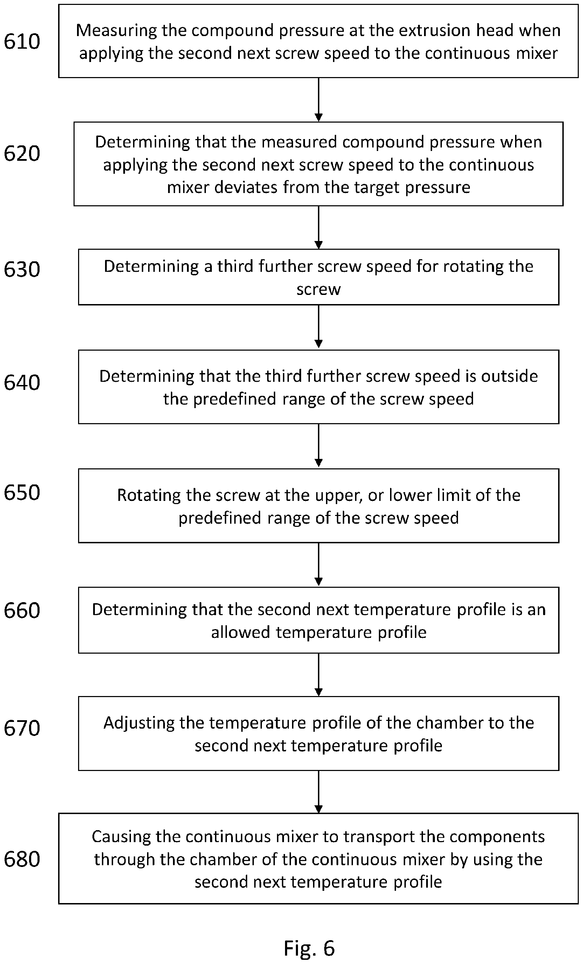

Fig. 6 shows a flow diagram illustrating a method to control a physical property level of a compound produced by a continuous mixer according to embodiments of the present disclosure.

The method illustrated with respect to Fig. 4, wherein the second screw speed is outside a predefined range of the screw speed, may further comprise measuring 610 the compound pressure at the extrusion head when applying the second screw speed to the continuous mixer, determining 620 that the measured compound pressure when applying the second screw speed to the continuous mixer deviates from the target pressure, determining 630 a third screw speed for rotating the screw, determining 640 that the third screw speed is outside the predefined range of the screw speed, rotating 650 the screw at the upper, or lower limit of the predefined range of the screw speed, determining 660 that the second temperature profile is an allowed temperature profile, adjusting 670 the temperature profile of the chamber to the second temperature profile, and causing 680 the continuous mixer to transport the components through the chamber of the continuous mixer by using the second temperature profile.

Stepwise adjusting the screw speed of the screw extruder within a predefined screw speed range using a first, second or third screw speed, allows a fine adjustment of the process conditions to keep compound pressure at the extruder head to the target pressure.

An additional temperature profile adjustment (e.g. temperature adjustment of different temperature variable zones of the chamber) allows influencing of process conditions, even when the screw speed reached the limit of the predefined screw speed range.

Prioritizing the screw speed adjustment over the temperature adjustment is beneficial since provide faster pressure response in that the process conditions can be varied stepwise. Varying the screw speed (until a predefined screw speed range is reached) before starting to vary the temperature allows changing process parameters as few as possible (e.g. screw speed only, or screw speed and temperature profile in case varying screw speed only is not sufficient to reach the target pressure).

In an embodiment, determining that the measured compound pressure using the second screw speed deviates from the target pressure may comprise using a dead-band wherein the dead-band corresponds to an allowed variation of the input target process pressure (e.g. compound pressure at the extrusion head). If the measured compound pressure lies within the dead band of the target pressure, the compound pressure is not adjusted. Defining a dead-band provides a tolerance for the compound pressure regulation to avoid continuous regulation around the target pressure resulting in an undesirable oscillation of the pressure.

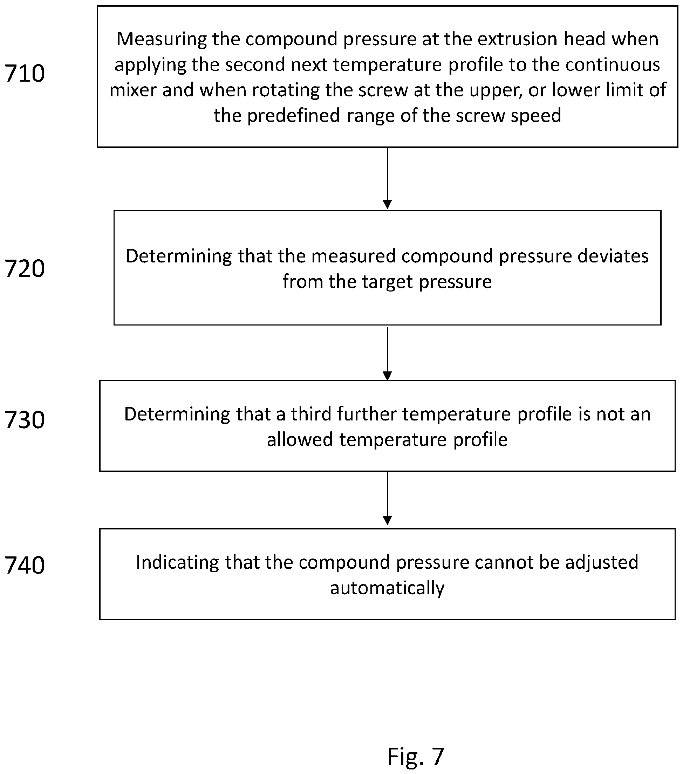

Fig. 7 shows a flow diagram illustrating a method to control a physical property level of a compound produced by a continuous mixer according to embodiments of the present disclosure.

The method illustrated with respect to Fig. 4 or Fig. 6, wherein the second screw speed is outside a predefined range of the screw speed, may further comprise measuring 710 the compound pressure at the extrusion head when applying the second temperature profile to the continuous mixer and when rotating the screw at the upper, or lower limit of the predefined range of the screw speed.

The method may further comprise determining 720 that the measured compound pressure deviates from the target pressure.

The method may further comprise determining 730 that a third temperature profile is not an allowed temperature profile.

The method may further comprise indicating 740 that the compound pressure cannot be adjusted automatically.

An indication that the compound pressure cannot be adjusted automatically allows the user or operator to stop using the automatic system to control physical property level of a compound. The operator can switch to another solution to control the physical property level.

According to a further embodiment, measuring the compound pressure may comprise measuring the compound pressure at least for a time span corresponding to a residence time of the components in the continuous mixer.

The components entering the continuous mixer pass the continuous mixer within a residence time. Thus, the residence time is needed until the measured compound pressure is adapted to a varied process condition.

According to a further embodiment, the residence time of the components in the continuous mixer may be dependent on the screw speed of the extruder. For example, the residence time may be set to a minimum of 2 minutes and to a maximum of 15 minutes.

According to a further embodiment, the screw extruder may be a single screw extruder, a twin screw extruder, or a multiple screw extruder.

According to a further embodiment, the compound pressure may be measured at an exit of the extruder head. For example, the target pressure may be set to a value between 2000 mbar and 10 000 mbar.

According to a further embodiment, the compound pressure can be measured at additional positions along the path of the continuous mixer.

According to an embodiment, determining that the measured compound pressure deviates from a target pressure of the compound pressure may comprise determining that the compound pressure is outside a range for example of +/- 30% compared to the target pressure.

In a further embodiment, the compound pressure may preferably be outside a range for example of +/- 15% compared to the target pressure.

According to a further embodiment, the predefined range of the screw speed may be +/- 30% of a setpoint of the screw speed

According to a further aspect, the predefined range of the screw speed may be +/- 50 rpm around a setpoint of the screw speed.

According to a further embodiment, adjusting the temperature profile of the chamber may comprise adjusting the temperature at least at one zone of the continuous mixer, or adjusting the temperature at a reaction section of the continuous mixer.

According to another embodiment, an apparatus for production of a compound used for manufacturing an article made of rubber. The apparatus comprises: a continuous mixer comprising: a screw extruder comprising at least one rotating screw housed inside a chamber, and an extrusion head that is coupled to the chamber, and wherein the screw extruder transports the components through the chamber of the continuous mixer to the extrusion head by rotating the screw at a first screw speed, wherein the components are continuously mixed for producing the compound, and wherein the continuous mixer has a first temperature profile. The apparatus further comprises means for measuring a compound pressure at the extrusion head, means for determining that the measured compound pressure deviates from a target pressure of the compound pressure, means for adjusting the compound pressure to the target pressure. The means for adjusting comprises means for determining a second screw speed for rotating the screw, and when the second screw speed is outside a predefined range of the screw speed, means for rotating the screw at the upper, or lower limit of the predefined range of the screw speed, and means for determining a second temperature profile for adjusting the temperature profile of the chamber.

According to another embodiment the apparatus for production of a compound used for manufacturing an article made of rubber according to the previous aspect, may further comprise means for carrying out the method of the present disclosure.

According to another embodiment, a computer-program comprise instructions for performing a method according to the present disclosure when executed by a processor.

In some embodiments, a computer-implemented algorithm, as illustrated in Fig. 8, may be used for automatically adjusting 350 the compound pressure to the target pressure. Therefore, the computer-implemented algorithm may use at least one or more input information from apparatus sensors 811 to acquire the present conditions (e.g. by measuring the compound pressure at the extrusion head). The computer-implemented algorithm may further use one or more input information from a set of parameters 812 from the production recipe of the final compound (e.g. screw speed from recipe; reaction temperature from recipe; compound residence time; or target pressure). The computer-implemented algorithm may further use at least one or more input information from a set of algorithm parameters 813 specific to the algorithm functionality (e.g. residence time; PID; dead-band; pressure regulation input range; allowed screw speed output variation; allowed temperature output variation/allowed temperature profile of the continuous mixer; dampening factor; thermal gain factor).

The computer-implemented algorithm may further comprise a computational block comprising a control or adjustment algorithm 820. Purpose of the computer-implemented algorithm is to regulate the screw speed and the reaction temperature of the apparatus (e.g. temperature profile of the continuous mixer).

Fig. 8 illustrates a computer-implemented algorithm to control compound pressure at an exit of a continuous mixer according to an embodiment of the present invention.

According to Fig. 8, the computer-implemented algorithm may use input information 810 to generate an output for actuators of the apparatus (e.g. continuous mixer) to control the process conditions and to allow the production of a final compound with stable physical properties.

The computer-implemented algorithm may use at least input from one or more apparatus sensors 811 to acquire the present conditions.

The computer-implemented algorithm aims keeping the apparatus output pressure (e.g. the compound pressure measured at the extrusion head) stable, therefore it may use an analogue pressure sensor determine the actual pressure value. The pressure sensor may be located at the extrusion head at an exit of the continuous mixer, as illustrated in Fig. 1. However due to the technological characteristics of a pressure sensor, the raw signal of the sensor contains a relevant portion of noise. In order to remove the noise before passing it to the algorithm, the signal may be down-sampled to a frequency conveniently set at 1 Hz, with a range from a minimum of 0.5Hz to a maximum of 10Hz.

Then, the down-sampled value may be put into a moving median having the number of samples which matches the material residence time. The residence time may be set within a range from a minimum of about 2 minutes to a maximum of about 15 minutes.

The computer-implemented algorithm may further use at least one or more input information from a set of parameters 812 from the production recipe of the final compound.

The computer-implemented algorithm may use a set of parameters which are related to the required physical properties of the compound.

In order to control the apparatus output pressure (e.g. the compound pressure measured at the extrusion head), the computer-implemented algorithm may use as a recipe parameter a twin extruder screw speed (e.g. [rpm]) set-point. In an example, the twin extruder screw speed set-point may be set at 100rpm with a variable range of +/-30% vs. setpoint.

The computer-implemented algorithm may further use as a recipe parameter, a temperature set-point of a section of the continuous mixer. In an example, the temperature set point of a reaction section may be within a variable range of +/-15% vs set-point.

A variation of the temperature set point of a reaction section in the continuous mixture generates a different temperature profile of the continuous mixer. The temperature profile can further be influenced by varying the temperature in the very cold, cold, or warm zones (illustrated in Fig. 2).

In another embodiment a recipe parameter may be an allowed temperature profile, or a temperature set-point of a temperature variable zone of the continuous mixer.

The computer-implemented algorithm may further use as a recipe parameter a target process pressure (e.g. [mbar]) of the compound at the exit of the apparatus considered optimal for the actual process

The computer-implemented algorithm may further use at least one or more input information from a set of algorithm parameters 813 specific to the algorithm functionality.

As input algorithm parameter, the computer-implemented algorithm may use the residence time (e.g. [minutes]) of the components in the continuous mixer. The residence time of the components is the time from entering the apparatus (e.g. continuous mixer) until reaching the exit where the pressure is measured (e.g. extrusion head of the continuous mixer).

As input algorithm parameter, the computer-implemented algorithm may further use a PID (proportional integral derivative) parameter. A portion of the algorithm may use a PID as control loop, this requires setting the proper proportional integral and derivative time of the PID itself.

As input algorithm parameter, the computer-implemented algorithm may further use a dead-band (e.g. [mbar]), wherein the dead-band corresponds to a minimum variation of the input target process pressure (e.g. compound pressure at the extrusion head). Defining a dead-band provides a tolerance for the compound pressure regulation to avoid continuous regulation around the target pressure resulting in an undesirable oscillation of the pressure.

As input algorithm parameter, the computer-implemented algorithm may further use a pressure regulation input range (e.g. [%]) corresponding to a range of input pressure which the algorithm evaluates for regulation. This is to avoid pushing the algorithm adjustment over the physical process capability.

As input algorithm parameter, the computer-implemented algorithm may further use an allowed screw speed output variation (e.g. [%]) corresponding to the maximum variation allowed to the adjustment of the screw speed.

As input algorithm parameter, the computer-implemented algorithm may further use an allowed temperature output variation (e.g. [%]) corresponding to the maximum variation allowed to the adjustment of the temperature variable zones (corresponding to an allowed temperature profile).

As input algorithm parameter, the computer-implemented algorithm may further use a dampening factor corresponding to a constant which is used by the control algorithm to dampen the input variations.

As input from a set of algorithm parameter, the computer-implemented algorithm may further use a thermal gain factor corresponding to a constant which is used by the control algorithm to scale the temperature adjustment control.

The exemplary computer-implemented algorithm may further comprise an algorithm computational block comprising a control or adjustment algorithm 820.

Purpose of the computer-implemented algorithm is to regulate the screw speed and the temperature of the apparatus (e.g. temperature profile of the continuous mixture) in order to keep the compound pressure at the apparatus's exit (e.g. extrusion head) stable.

The apparatus may feature an analogue pressure sensor at the exit of the apparatus (e.g. extrusion head of the continuous mixer).

The resulting filtered moving median may be checked against the allowed input pressure variation, if it is within the specified limits. In an example, the specified limits may be conveniently set at +/- 15 % of the target process pressure, then it is used by the computer-implemented algorithm as Present Value of the PID.

The target process pressure may also be used as set value of the PID, representing the target optimal compound pressure for the current process. The difference between the pressure moving median and the target process pressure may be the PID error.

A portion of the computer-implemented algorithm may use a PID for the calculation of the total adjustment output. The PID parameters are conveniently set based on experimental value of the process, and they may share a common dampening factor to proportionally scale down the PID loop. The PID loop time may match the residence time of the compound/components.

At each PID refresh iteration, the PID output is updated and may become the Band#1 Output. The Band#1 Output represents the amount of correction to be imposed over the screw speed, up to its maximum variation range.

If the Output Band#1 exceeds the maximum variation range, the exceeding portion of the Band#1 Output becomes the Band#2 Output. In this case, a variation of the screw speed is not able to keep the compound pressure under control.

The Band#2 Output represents the amount of correction to be imposed over the reaction section by changing the set point of its thermal regulation, and it is proportionally scaled up by the thermal gain factor to match the thermal regulation requirements. The resulting value is the desired output temperature of the reaction section.

The desired output temperature of the some section is then checked against the allowed temperature variation (e.g. allowed temperature profile) to ensure the thermal regulation remains within the apparatus capability.

If the desired output temperature of the some section is outside the allowed range, the computer-implemented algorithm outputs a message to the apparatus interface informing the operator that the process can no longer be adjusted automatically.

In some embodiments, the temperature profile of the continuous mixer can be varied by varying the temperature of at least one of a very cold, cold, warm, or hot zone as illustrated in Fig. 2.

Based on the calculations of the adjustment algorithm 820, output is provided to the apparatus actuators 830.

The output may comprise the calculated screw speed, wherein the screw speed is within the allowed adjustment range.

The output may further comprise the calculated temperature of the reaction section of the apparatus (e.g. continuous mixer), wherein the temperature is within the allowed adjustment range.

### LIST OF REFERENCE SIGNS AS USED IN THE DRAWINGS

- 100; 200: apparatus
- 120: continuous mixer
- 130: external sleeve
- 140: chamber
- 150: screw/shaft
- 160: auger
- 170: supply inlet/hopper
- 180: mixture portion
- 190: transport portion
- 110: mixing portion
- 111: extrusion head
- 210: very cold zone
- 220: cold zone
- 230: warm zone
- 240: hot zone
- 810: input information
- 811: apparatus sensors
- 812: production recipe parameters
- 813: algorithm parameters
- 820: adjustment algorithm
- 830: apparatus actuators

## Claims

1. A method for production of a compound used for manufacturing an article made of rubber, the method comprising:
supplying components of the compound to a continuous mixer, the continuous mixer comprising:
a screw extruder comprising at least one rotating screw housed inside a chamber, and
an extrusion head that is coupled to the chamber; and
transporting, by the screw extruder, the components through the chamber of the continuous mixer to the extrusion head by rotating the screw at a first screw speed, wherein the components are continuously mixed for producing the compound, and wherein the continuous mixer has a first temperature profile;
measuring a compound pressure at the extrusion head;
determining that the measured compound pressure deviates from a target pressure of the compound pressure;
adjusting the compound pressure to the target pressure, wherein adjusting the compound pressure to the target pressure comprises:
determining a second screw speed for rotating the screw; and
when the second screw speed is outside a predefined range of the screw speed:
rotating the screw at the upper, or lower limit of the predefined range of the screw speed, and
determining a second temperature profile for adjusting the temperature profile of the chamber.

2. Method of claim 1, wherein adjusting the compound pressure to the target pressure further comprises:
determining that the second temperature profile is an allowed temperature profile;
adjusting the temperature profile of the chamber to the second temperature profile; and
causing the continuous mixer to transport the components through the chamber of the continuous mixer by using the second temperature profile.

3. Method of claim 1 or claim 2, wherein adjusting the compound pressure to the target pressure further comprises:
determining that the second screw speed is not outside the predefined range of the screw speed:
causing the continuous mixer to transport the components through the chamber of the continuous mixer by using the second screw speed and the first temperature profile.

4. Method of claim 3, the method further comprising:
measuring the compound pressure at the extrusion head when applying the second screw speed to the continuous mixer;
determining that the measured compound pressure using the second screw speed corresponds to the target pressure; and
continue transporting the components through the chamber by using the second screw speed.

5. Method of claim 3, the method further comprising:
measuring the compound pressure at the extrusion head when applying the second screw speed to the continuous mixer;
determining that the measured compound pressure using the second screw speed deviates from the target pressure;
determining a third screw speed for rotating the screw;
determining that the third screw speed is outside the predefined range of the screw speed;
rotating the screw at the upper, or lower limit of the predefined range of the screw speed;
determining that the second temperature profile is an allowed temperature profile;
adjusting the temperature profile of the chamber to the second temperature profile; and
causing the continuous mixer to transport the components through the chamber of the continuous mixer by using the second temperature profile.

6. Method of claim 2 or claim 5, the method comprising:
measuring the compound pressure at the extrusion head when applying the second temperature profile to the continuous mixer and when rotating the screw at the upper, or lower limit of the predefined range of the screw speed; and
determining that the measured compound pressure deviates from the target pressure; and
determining that a third temperature profile is not an allowed temperature profile; and
indicating that the compound pressure cannot be adjusted automatically.

7. Method of any of the preceding claims, wherein measuring the compound pressure comprises measuring the compound pressure at least for a time span corresponding to a residence time of the components in the continuous mixer.

8. Method of claim 7,
wherein the residence time of the components in the continuous mixer is dependent on the screw speed of the extruder; or
wherein the residence time is set to a minimum of 4 minutes and to a maximum of 15 minutes; preferably, the residence time is set to 7 minutes.

9. Method of any of the preceding claims, wherein the screw extruder is a single screw extruder, a twin screw extruder, or a multiple screw extruder.

10. The method of any of the preceding claims,
wherein the compound pressure is measured at an exit of the extruder head;
and/or
wherein the target pressure is 4000 mbar; and/or
wherein determining that the measured compound pressure deviates from a target pressure of the compound pressure comprises determining that the compound pressure is outside a range of +/- 30% compared to the target pressure, or preferably outside a range of +/- 15% compared to the target pressure.

11. The method of any of the preceding claims,
wherein the predefined range of the screw speed is +/- 30% of a setpoint of the screw speed; and/or
wherein the setpoint is 100 rpm.

12. The method of any of the preceding claims,
wherein adjusting the temperature profile of the chamber comprises:
adjusting the temperature at least at one zone of the continuous mixer;
or
adjusting the temperature at a reaction section of the continuous mixer.

13. An apparatus for production of a compound used for manufacturing an article made of rubber, the apparatus comprising:
a continuous mixer comprising:
a screw extruder comprising at least one rotating screw housed inside a chamber, and
an extrusion head that is coupled to the chamber; and
wherein the screw extruder transports the components through the chamber of the continuous mixer to the extrusion head by rotating the screw at a first screw speed, wherein the components are continuously mixed for producing the compound, and wherein the continuous mixer has a first temperature profile;
means for measuring a compound pressure at the extrusion head;
means for determining that the measured compound pressure deviates from a target pressure of the compound pressure;
means for adjusting the compound pressure to the target pressure, wherein the means for adjusting comprises:
means for determining a second screw speed for rotating the screw; and
when the second screw speed is outside a predefined range of the screw speed, means for rotating the screw at the upper, or lower limit of the predefined range of the screw speed, and means for determining a second temperature profile for adjusting the temperature profile of the chamber.

14. Apparatus for production of a compound used for manufacturing an article made of rubber according to claim 13, further comprising means for carrying out the method of any of claims 2 to 12.

15. A computer-program comprising instructions for performing a method according to any of the claims 1 to 12 when executed by a processor.
